(19) Europäisches Patentamt / European Patent Office / Office européen des brevets

(11) **EP 4 055 375 B1**

(12) **FASCICULE DE BREVET EUROPEEN**

(45) Date de publication et mention de la délivrance du brevet:
**17.01.2024 Bulletin 2024/03**

(21) Numéro de dépôt: **20793743.4**

(22) Date de dépôt: **28.10.2020**

(51) Classification Internationale des Brevets (IPC):
***G01N 25/72*** *(2006.01)*

(52) Classification Coopérative des Brevets (CPC):
**G01N 25/72**

(86) Numéro de dépôt international:
**PCT/EP2020/080306**

(87) Numéro de publication internationale:
**WO 2021/089383 (14.05.2021 Gazette 2021/19)**

(54) **ANALYSE PHOTOTHERMIQUE D'UNE PIECE DE MATERIAU SOLIDE**

PHOTOTHERMISCHE ANALYSE EINES TEILS EINES FESTEN MATERIALS

PHOTOTHERMAL ANALYSIS OF A PART OF SOLID MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2019 FR 1912330**

(43) Date de publication de la demande:
**14.09.2022 Bulletin 2022/37**

(73) Titulaire: **Office National d'Etudes et de Recherches Aérospatiales**
**91120 Palaiseau (FR)**

(72) Inventeur: **TROTTIER, Camille**
**91290 ARPAJON (FR)**

(74) Mandataire: **Plasseraud IP**
**66, rue de la Chaussée d'Antin**
**75440 Paris Cedex 09 (FR)**

(56) Documents cités:
**KR-A- 20170 126 725**

- **ZHANWEI LIU ET AL: "Linear laser fast scanning thermography NDT for artificial disbond defects in thermal barrier coatings", OPTICS EXPRESS, vol. 25, no. 25, 6 décembre 2017 (2017-12-06), page 31789, XP055719273, DOI: 10.1364/OE.25.031789**
- **PAWAR S S ET AL: "Applying the heat conduction-based 3D normalization and thermal tomography to pulsed infrared thermography for defect characterization in composite materials", INTERNATIONAL JOURNAL OF HEAT AND MASS TRANSFER, ELSEVIER, AMSTERDAM, NL, vol. 94, 30 novembre 2015 (2015-11-30), pages 56-65, XP029362679, ISSN: 0017-9310, DOI: 10.1016/J.IJHEATMASSTRANSFER.2015.11.018**
- **SOMMIER A ET AL: "Coupling Pulsed Flying Spot technique with robot automation for industrial thermal characterization of complex shape composite materials", NDT & E INTERNATIONAL, vol. 102, 22 novembre 2018 (2018-11-22), pages 175-179, XP085614218, ISSN: 0963-8695, DOI: 10.1016/J.NDTEINT.2018.11.011**

## Description

### Domaine technique

La présente description concerne un procédé et un ensemble d'analyse photothermique pour révéler des défauts qui sont présents à la surface d'une pièce de matériau solide.

### Technique antérieure

Il est connu de révéler au moins un défaut qui est présent dans une portion de surface d'une pièce constituée par au moins un matériau solide en utilisant un procédé d'analyse photothermique. Un tel procédé comprend les étapes suivantes :

/1/ injecter de la chaleur dans une première zone de la portion de surface de la pièce, appelée zone de chauffage, puis, après une durée pendant laquelle une partie de la chaleur injectée a diffusé dans une autre zone de la portion de surface de la pièce, qui est appelée zone de détection et qui est distincte de la zone de chauffage, saisir au moins une image thermique, appelée image d'analyse, de la zone de détection ; et

/2/ soustraire une image de référence à l'image d'analyse, au moins pour une partie de l'image d'analyse qui correspond à la zone de détection, afin d'obtenir une image de révélation qui montre au moins un défaut présent dans cette zone de détection.

Dans un tel procédé connu de l'art antérieur, par exemple du document WO 98/39641, l'étape /1/ est exécutée plusieurs fois en déplaçant à chaque fois la zone de chauffage dans la portion de surface de la pièce, de façon à réaliser un balayage de cette portion de surface avec des zones de détection successives. La zone de détection se déplace dans la portion de surface de la pièce conjointement avec la zone de chauffage, et une nouvelle image d'analyse est saisie à chaque répétition de l'étape /1/. L'étape /2/ est aussi répétée, pour chaque exécution de l'étape /1/. D'après le document WO 98/39641, la même portion de surface à analyser est parcourue deux fois selon un même chemin de balayage, mais les deux fois sont relatives à des sens de parcours opposés du chemin de balayage. Alors, les images d'analyse relatives à une même zone de détection, qui ont été saisies chacune pour un sens de parcours différent du chemin de balayage, sont soustraites l'une à l'autre pour former l'image de révélation. Autrement dit, l'image d'analyse qui a été saisie pour le premier sens du balayage est utilisée comme image de référence pour l'image d'analyse saisie pour le second sens du balayage. L'image de révélation qui est ainsi obtenue révèle certains des défauts qui sont présents dans la portion de surface de la pièce, par exemple sous forme d'écarts de température qui sont localisés d'un côté et de l'autre de chaque défaut, avec un signe d'écart de température qui dépend du côté du défaut. En effet, de la chaleur est accumulée dans une mesure un peu plus importante entre le défaut et la zone de chauffage qui est déplacée vers ce défaut pour chaque sens du balayage, si le défaut provoque une résistance thermique locale dans la pièce qui est un plus élevée.

Un tel procédé est efficace, mais présente l'inconvénient de nécessiter que la portion de surface de la pièce soit balayée deux fois, pour obtenir des images d'analyse qui correspondent aux deux sens opposés de balayage. Il en résulte un temps de cycle d'analyse pour chaque pièce qui est long, et difficilement compatible avec une cadence élevée de production de pièces en série.

L'article de Zhanwei Liu et al. qui est intitulé «Linear laser fast scanning thermography NDT for artificiel disbond defects in thermal barrier coatings», Optics Express, vol. 25, n° 25, page 31789, décrit un procédé d'analyse photothermique d'une pièce, qui utilise une image moyennée en tant qu'image de référence afin de supprimer l'apparition dans l'image de référence de défauts présents dans la zone de détection.

L'article de S.S. Pawar et al. qui est intitulé «Applying the heat conductionbased 3D normalization and thermal tomography to pulsed infrared thermography for defect characterization in composite materials», International Journal of Heat and Mass Transfer, vol. 94, pages 56-65, décrit de diviser une séquence d'images infrarouges expérimentales par une séquence de synthèse qui est calculée en résolvant le problème correspondant tridimensionnel de conduction de chaleur.

### Problème technique

A partir de cette situation, un but de la présente invention consiste à permettre de contrôler des pièces par un procédé d'analyse photothermique, avec un temps de cycle d'analyse pour chaque pièce qui soit plus court.

Un autre but de l'invention est de fournir par analyse photothermique des images de révélation qui présentent des valeurs de rapport signal-sur-bruit supérieures à celles procurées par les procédés connus de l'art d'antérieur.

### Résumé de l'invention

Pour atteindre l'un au moins de ces buts ou d'autres, un premier aspect de l'invention propose un nouveau procédé d'analyse photothermique qui est conforme à la revendication 1. Ce procédé comprend les étapes /1/ et /2/ telles que décrites précédemment, mais l'image de référence qui est soustraite à l'image d'analyse correspond à une répartition d'émission thermique dans la zone de détection, telle que provoquée par une partie au moins de la chaleur injectée dans la portion de surface de la pièce, pour un cas où la portion de surface de la pièce serait dépourvue de défaut dans la zone de détection. Grâce à l'utilisation d'une telle image de référence, une seule image d'analyse et suffisante pour chaque zone de détection, si bien que le temps de cycle qui est nécessaire pour analyser une pièce est sensiblement divisé par deux. Ce gain de temps de cycle d'analyse est d'autant plus important que la portion de surface à analyser est grande, et nécessite un grand nombre de zones de détection contiguës pour être entièrement couverte.

Par ailleurs, le procédé de l'invention ne nécessitant de saisir qu'une seule image d'analyse pour chaque zone de détection, chaque image de révélation est affectée par un rapport signal-sur-bruit qui est réduit par rapport à des procédés où chaque image de révélation résulte d'une combinaison de plusieurs images d'analyse.

De façon générale pour l'invention, la zone de détection qui est imagée dans l'image d'analyse peut comprendre la zone de chauffage, mais elle peut être de préférence décentrée ou décalée par rapport à cette zone de chauffage, contiguë ou bien écartée de celle-ci dans la portion de surface à analyser.

Encore de façon générale pour l'invention, la chaleur peut être injectée dans la zone de chauffage à l'aide d'un faisceau laser qui est dirigé sur cette zone de chauffage pendant une durée d'irradiation déterminée. Une telle méthode d'apport de chaleur est particulièrement simple et rapide à mettre en oeuvre. Elle est donc adaptée pour obtenir un temps de cycle d'analyse de chaque pièce qui soit court.

Selon une caractéristique supplémentaire de l'invention, l'image de référence qui est soustraite à l'image d'analyse résulte d'une recherche de concordance maximale entre l'image d'analyse et un modèle paramétré de répartition d'émission thermique qui est utilisé pour définir le cas de la portion de surface de la pièce dépourvue de défaut dans la zone de détection. Ce modèle paramétré de répartition d'émission thermique, qui est utilisé pour définir le cas de la portion de surface de la pièce dépourvue de défaut dans la zone de détection, correspond à un régime stationnaire de diffusion de la chaleur dans cette zone de détection. Il est décrit par une équation qui fournit des valeurs de température en fonction de deux coordonnées géométriques définies dans la portion de surface de la pièce. Cette équation comprend une fonction gaussienne de l'une au moins des deux coordonnées géométriques, la fonction gaussienne étant multipliée par un facteur d'amplitude constant, et additionnée d'un terme constant de décalage.

De préférence, le procédé est mis en oeuvre en décrivant un balayage de la portion de surface à analyser, pour pouvoir être appliqué efficacement à des pièces qui possèdent des dimensions supérieures à celles de la zone de détection. Dans ce cas :

-    l'étape /1/ est exécutée plusieurs fois en déplaçant à chaque fois la zone de chauffage dans la portion de surface de la pièce, de façon à réaliser un balayage dans cette portion de surface avec des positions successives de la zone de chauffage, et une nouvelle image d'analyse est saisie pour chaque position de la zone de chauffage, la zone de détection se déplaçant dans la portion de surface de la pièce conjointement avec la zone de chauffage, de sorte qu'un endroit quelconque dans la portion de surface de la pièce soit contenu au moins une fois dans la zone de détection ; et

-    l'étape /2/ est répétée pour chaque exécution de l'étape /1/, en utilisant à chaque fois une image de référence qui est attribuée à la zone de détection telle que située dans la portion de surface de la pièce à cette exécution de l'étape /1/.

Les images de référence qui sont attribuées à des positions distinctes de la zone détection dans la portion de surface à analyser, pour des répétitions différentes des étapes /1/ et /2/ et pour obtenir des images de révélation qui concernent séparément ces zones de détection distinctes, peuvent être identiques ou différentes.

Pour de telles mises en oeuvre de l'invention avec balayage de la portion de surface à analyser, la zone de détection peut être décalée pour chaque exécution de l'étape /1/, vers l'aval par rapport à la zone de chauffage selon un sens de déplacement de cette zone de chauffage lors du balayage. Le procédé présente ainsi une sensibilité supérieure, par rapport à une configuration qui provoquerait un chauffage plus progressif dans la zone de détection.

Encore pour de telles mises en oeuvre avec balayage, le procédé peut comprendre en outre l'étape suivante :

/3/ en utilisant des opérations de raccordement, de superposition, de moyenne et/ou de lissage appliquées à plusieurs des images de révélation telles qu'obtenues lors des exécutions multiples de l'étape /2/, reconstruire une image globale de toute la portion de surface de la pièce, destinée à montrer des défauts qui sont présents dans toute cette la portion de surface. L'image globale permet un contrôle visuel de l'ensemble de la portion de surface, qui est rapide et efficace.

De façon générale, le procédé de l'invention peut être utilisé pour tous types de pièces constituées d'au moins un matériau solide, y compris une pièce métallurgique, une pièce qui est constituée au moins en partie par un matériau céramique, ou une pièce qui est constituée au moins en partie par un matériau composite. Il peut notamment être utilisé avantageusement pour analyser une aube de turboréacteur ou de soufflante, une aube de turbine de production d'énergie, une pièce de fermeture de cuve ou d'étanchéité pour centrale de production d'énergie, ou une pièce mécanique de transmission de déplacement.

Eventuellement, la pièce peut comprendre un substrat solide et un revêtement qui est porté par ce substrat au moins dans la portion de surface à analyser. Le procédé peut alors être utilisé pour révéler des fissures susceptibles d'être présentes dans le revêtement.

Un second aspect de l'invention propose un ensemble d'analyse photothermique, pour révéler au moins un défaut qui est présent dans une portion de surface d'une pièce constituée par au moins un matériau solide, cet ensemble comprenant :

- un moyen d'apport de chaleur, qui est adapté pour injecter de la chaleur dans une première zone de la portion de surface de la pièce, appelée zone de chauffage ;
- des moyens de saisie d'images thermiques, qui sont agencés pour saisir des images thermiques, appelées images d'analyse, d'une autre zone de la portion de surface de la pièce, appelée zone de détection et qui est distincte de la zone de chauffage, les moyens de saisie d'images thermiques étant contrôlés pour saisir chaque image d'analyse après une durée pendant laquelle une partie de la chaleur injectée par le moyen d'apport de chaleur a diffusé à partir de la zone de chauffage dans la zone de détection ;
- une unité de traitement d'images, adaptée pour soustraire une image de référence à chaque image d'analyse, au moins pour une partie de cette image d'analyse qui correspond à la zone de détection, afin d'obtenir une image de révélation qui montre au moins un défaut présent dans cette zone de détection ; et
- optionnellement des moyens de balayage, qui sont adaptés pour déplacer la zone de chauffage dans la portion de surface de la pièce, de façon à réaliser un balayage dans cette portion de surface avec des positions successives de la zone de chauffage, la zone de détection se déplaçant dans la portion de surface de la pièce conjointement avec la zone de chauffage, de sorte qu'un endroit quelconque dans la portion de surface de la pièce soit contenu au moins une fois dans la zone de détection.

L'unité de traitement d'images est adaptée de sorte que, pour chaque image d'analyse saisie, l'image de référence qui lui est soustraite corresponde à une répartition d'émission thermique dans la zone de détection, telle que provoquée par une partie au moins de la chaleur injectée dans la portion de surface de la pièce, pour un cas où la portion de surface de la pièce serait dépourvue de défaut dans la zone de détection. Selon la caractéristique supplémentaire déjà citée pour le premier aspect de l'invention, l'image de référence qui est soustraite à l'image d'analyse résulte d'une recherche de concordance maximale entre cette image d'analyse et un modèle paramétré de répartition d'émission thermique qui est utilisé pour définir le cas de la portion de surface de la pièce dépourvue de défaut dans la zone de détection. Ce modèle paramétré de répartition d'émission thermique correspond à un régime stationnaire de diffusion de la chaleur dans la zone de détection, et est décrit par une équation qui fournit des valeurs de température en fonction de deux coordonnées géométriques définies dans la portion de surface de la pièce, cette équation comprenant une fonction gaussienne de l'une au moins des deux coordonnées géométriques, multipliée par un facteur d'amplitude constant, et additionnée d'un terme constant de décalage.

Un tel ensemble d'analyse photothermique est adapté pour mettre en oeuvre un procédé qui est conforme au premier aspect de l'invention, éventuellement y compris les mises en oeuvre préférées et les perfectionnements optionnels qui ont été décrits précédemment.

**Brève description des figures**

Les caractéristiques et avantages de la présente invention apparaîtront plus clairement dans la description détaillée ci-après d'exemples de mises en oeuvre nonlimitatifs, en référence aux figures annexées parmi lesquelles :

[Fig. 1] est un schéma synoptique d'un ensemble d'analyse photothermique qui est conforme à l'invention ; et

[Fig. 2] montre une configuration possible pour un balayage d'une pièce à analyser en utilisant un procédé conforme à l'invention.

**Description détaillée de l'invention**

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement.

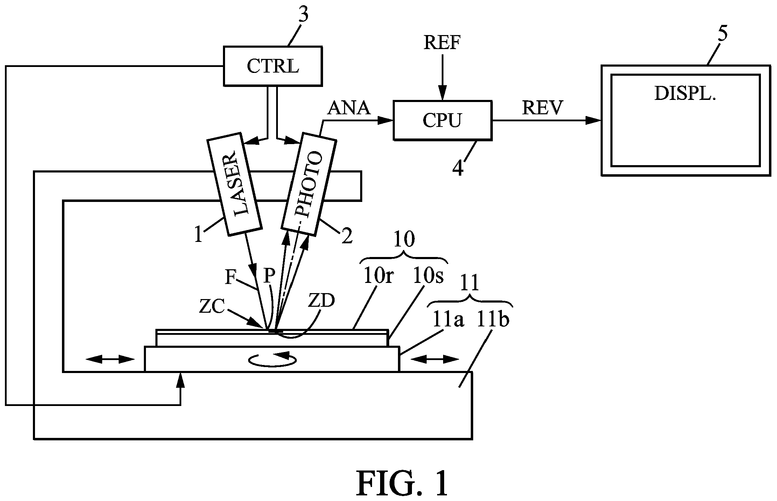

Conformément à [Fig. 1], un ensemble d'analyse photothermique qui est destiné à révéler des défauts éventuellement présents à la surface d'une pièce 10, comprend un moyen d'apport de chaleur 1 et des moyens de saisie d'images thermiques 2. Le moyen d'apport de chaleur 1 peut être constitué à partir d'une source laser, dont le faisceau F est dirigé vers une zone de la surface de la pièce 10 qui est destinée à recevoir localement un flux d'énergie. La longueur d'onde de la source laser est sélectionnée pour que le rayonnement laser soit essentiellement absorbé par la pièce 10, afin qu'il soit converti en un flux de chaleur qui diffuse ensuite au sein de la pièce 10. Ce peut être par exemple un laser à $CO_2$ produisant un rayonnement de longueur d'onde 10,6 $\mu$m (micromètre). Le flux de chaleur qui est généré ainsi dans la pièce 10 provoque une augmentation locale de la température à sa surface, à distance de la zone qui a reçu le faisceau laser F. Les moyens de saisie d'images thermiques 2, notés PHOTO, possèdent une sensibilité suffisante pour mettre évidence des augmentations locales de la température de la surface de la pièce 10, telles que générées par le moyen d'apport de chaleur 1. Par exemple, les moyens de saisie d'images thermiques 2 peuvent être constitués par un capteur d'images à microbolomètres, qui est associé à une optique de focalisation disposée pour conjuguer optiquement une zone de détection dans la surface de la pièce 10 avec la surface sensible du capteur d'images.

Un contrôleur 3, noté CTRL, peut être prévu pour commander de façon coordonnée le moyen d'apport de chaleur 1 et les moyens de saisie d'images thermiques 2. Une séquence d'analyse photothermique comprend alors d'activer le moyen d'apport de chaleur 1 pour injecter une quantité de chaleur dans une zone déterminée de la surface de la pièce 10, appelée zone de chauffage et notée ZC, et de saisir une image thermique d'une zone de détection notée ZD, qui est située dans la surface de la pièce 10 à proximité de la zone de chauffage ZC. La zone de chauffage ZC peut correspondre à une section du faisceau laser F autour d'un point de visée P dans la surface de la pièce 10. L'image thermique de la zone de détection ZD est saisie après une durée déterminée à partir de l'activation du moyen d'apport de chaleur 1, pour permettre à la chaleur de diffuser à partir de la zone de chauffage ZC dans la zone de diffusion ZD. Cette durée, qui peut être comprise entre 0,01 s (seconde) et 0,5 s par exemple, est contrôlée par le contrôleur 3. L'image thermique qui est ainsi saisie par les moyens 2 est notée ANA dans [Fig. 1], et a été appelée image d'analyse dans la partie générale de la présente description. Elle reproduit des variations spatiales d'un rayonnement d'émission thermique qui a été produit par la pièce 10 dans la zone de détection ZD, suite au chauffage dans la zone ZC. Ces variations spatiales résultent d'une diffusion de la chaleur dans la pièce 10, à partir de la zone de chauffage ZC et dans la zone de détection ZD, qui est combinée avec des perturbations provoquées par des défauts éventuellement présents dans la pièce 10, entre les zones ZC et ZD et dans la zone ZD. Le moyen d'apport de chaleur 1 et les moyens de saisie d'images thermiques 2 sont orientés de sorte que la zone de détection ZD soit proche de la zone de chauffage ZC dans la surface de la pièce 10. Eventuellement, la zone de détection ZD peut contenir la zone de chauffage ZC, si aucune saturation du capteur d'images infrarouges ne survient. Mais de préférence, la zone de détection ZD et la zone de chauffage ZC sont contiguës, ou distantes l'une de l'autre avec un intervalle de séparation qui est réduit. Des dimensions de la zone de détection ZD peuvent être 6 mm (millimètre) x 4 mm environ, et la zone de chauffage ZC peut être un disque de diamètre 1 mm.

Selon l'invention, une unité de traitement d'images 4 est adaptée pour comparer l'image d'analyse ANA à une image de référence. L'unité de traitement d'images 4 peut être constituée par un processeur noté CPU, connecté pour recevoir en entrée d'une part l'image d'analyse ANA telle que délivrée par les moyens de saisie d'images thermiques 2, et recevoir par ailleurs une image thermique de référence notée REF et appelée image de référence. L'unité 4 est conçue ou programmée pour calculer une image différentielle, qui résulte de la soustraction point-à-point de valeurs d'intensité de l'image de référence REF aux valeurs d'intensité de l'image d'analyse ANA. Lorsque l'image de référence REF correspond à une diffusion de la chaleur dans la pièce 10 en l'absence de défauts dans la zone de détection ZD, l'image différentielle révèle des défauts de la pièce 10 qui y sont présents avec un contraste élevé. Pour cette raison, l'image différentielle a été appelée image de révélation pour montrer au moins un défaut qui serait présent dans la zone de détection ZD, dans la partie générale de la présente description, et a été notée REV dans [Fig. 1].

On présente maintenant différentes façons d'obtenir l'image de référence REF. De façon générale, il est avantageux que l'image de référence REF puisse être ajustée selon au moins un paramètre à l'image d'analyse ANA. De tels paramètres d'ajustement peuvent comprendre par exemple un facteur multiplicatif constant et un terme additif aussi constant qui sont appliqués à l'ensemble des valeurs d'intensité de point d'image de l'image de référence REF. Ces paramètres peuvent notamment permettre de supprimer des écarts de valeur de température ambiante et de valeur de puissance thermique injectée dans la zone de chauffage ZC, entre des circonstances expérimentales qui correspondent à la saisie de l'image d'analyse ANA et des conditions qui correspondent à l'image de référence REF. Des paramètres d'ajustement additionnels peuvent aussi être utilisés pour ajuster de façon supplémentaire ou de façon alternative l'image de référence REF à l'image d'analyse ANA, tels qu'au moins une longueur caractéristique de décroissance de la température dans la pièce 10. Une telle longueur caractéristique de décroissance de la température peut permettre de supprimer des effets de différences de valeurs de capacité calorifique et de résistance thermique qui pourraient exister entre les circonstances expérimentales de la saisie de l'image d'analyse ANA et les conditions qui correspondent à l'image de référence REF. De façon générale, un algorithme de recherche de concordance maximale, ou «best match» en anglais, peut être utilisé pour ajuster les paramètres de l'image de référence REF en fonction de l'image d'analyse ANA.

Selon des premières mises en oeuvre possibles de l'invention, l'image de référence REF peut résulter d'un modèle qui décrit la répartition d'émission thermique dans la zone de détection ZD, telle que provoquée par la chaleur qui a été injectée dans la zone de chauffage ZC, et qui correspond à un régime stationnaire de diffusion de la chaleur. De façon connue, un tel modèle de régime stationnaire peut correspondre à une équation de répartition de température dans la zone de détection ZD du type : $T(x,y) = A \cdot e^{-\left[\frac{(x-x_0)^2}{\sigma_x^2} + \frac{(y-y_0)^2}{\sigma_y^2}\right]} + B$, où T désigne la température locale dans la zone de détection ZD, A est un facteur multiplicatif d'ajustement, B est un terme additif d'ajustement, x et y sont deux coordonnées cartésiennes définies dans la surface de la pièce 10, $e^{(\cdot)}$ désigne la fonction exponentielle de base e, $\sigma_x$ et $\sigma_y$ sont deux écarts-types respectivement selon les coordonnées x et y, et $x_0$ et $y_0$ sont des valeurs de positionnement en translation du modèle de répartition thermique parallèlement à la surface de la pièce 10. Les valeurs des écarts-types $\sigma_x$ et $\sigma_y$, de même que les valeurs de $x_0$ et $y_0$ peuvent être ajustées par rapport à l'image d'analyse ANA, en plus des paramètres A et B. De façon connue, une telle répartition de température est une fonction gaussienne paramétrée des coordonnées cartésiennes x et y.

D'autres modèles peuvent être utilisés alternativement pour fournir l'image de référence REF. Notamment, de tels autres modèles peuvent prendre en compte la présence d'une couche d'épaisseur déterminée à la surface de la pièce 10, qui est constituée d'un matériau de revêtement différent de celui d'une partie de base de la pièce 10. D'autres modèles peuvent aussi prendre en compte la présence dans la zone de détection ZD d'une interface qui est orientée perpendiculairement ou obliquement par rapport à la surface de la pièce 10, entre deux matériaux différents qui constituent des parties adjacentes de la pièce 10. D'autres modèles encore peuvent prendre en compte des formes variables de la zone de chauffage ZC, et/ou des positions variables de la zone de chauffage ZC par rapport à la zone de détection ZD.

L'image de révélation REV telle que calculée par l'unité de traitement d'images 4 peut être affichée sur un écran 5, noté DISPL, pour être visualisée par un opérateur de contrôle. Elle révèle des aspects de la pièce 10 dans la zone de détection ZD qui altèrent la diffusion de la chaleur par rapport au comportement de diffusion qui est effectif pour l'image de référence REF. De tels aspects correspondent aux défauts de la pièce 10, et peuvent être des fissures présentes dans la surface de celle-ci, des inclusions de phases différentes, des craquelures dans un revêtement de surface de la pièce 10, etc. Eventuellement, pour mettre encore plus en évidence de tels défauts, un filtre d'image de type passe-haut peut être appliqué à l'image de révélation REV, avant que celle-ci soit affichée sur l'écran 5. Par exemple, un filtre d'image de type filtre de Sobel peut être utilisé dans ce but.

Un tel procédé d'analyse photothermique peut être particulièrement adapté pour vérifier que la pièce 10 ne comporte pas de défauts qui soient susceptibles de provoquer des défaillances lors de son utilisation ultérieure. Par exemple, la pièce 10 peut être une aube de compresseur de turboréacteur aéronautique, qui est constituée d'un substrat solide 10s recouvert d'une couche mince 10r. La fonction de la couche 10r peut être une protection contre la corrosion. Alors, le procédé d'analyse photothermique de l'invention peut être utilisé en particulier pour contrôler un niveau de faïençage de la couche 10r.

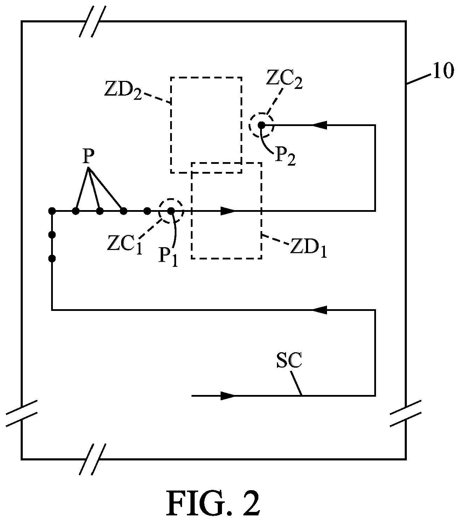

Afin de contrôler rapidement une portion de surface de la pièce 10 qui peut posséder des dimensions supérieures à celles de la zone de détection ZD telle que décrite jusqu'à présent, correspondant à une seule séquence d'injection de chaleur et de saisie d'image d'analyse, la portion de surface de la pièce 10 à analyser peut être balayée selon un chemin de balayage SC (voir [Fig. 2]). Ce chemin de balayage SC est suivi par des points centraux de zones de chauffage qui sont adoptées successivement. Les positions et orientations relatives du moyen d'apport de chaleur 1 et des moyens de saisie d'images thermiques 2 sont de préférence constantes, mais mobiles par rapport à la pièce 10. Selon une configuration possible de l'ensemble d'analyse photothermique, la pièce 10 peut être montée sur un support 11a, qui est mobile par rapport à une embase 11b de l'ensemble, cette dernière étant fixe par rapport aux moyens 1 et 2. La pièce 10 peut ainsi être déplacée parallèlement à sa surface à analyser, selon deux directions perpendiculaires entre elles, et tournée autour d'un axe qui est perpendiculaire à ces deux directions. Les moyens de balayage 11 comprennent ainsi le support mobile 11a, l'embase 11b, et une partie du contrôleur 3 qui est dédiée à commander le déplacement de la pièce 10 de façon synchronisée avec les déclenchements des moyens 1 et 2.

[Fig. 2] est une vue en élévation de la portion à analyser de la surface de la pièce 10, montrant le chemin de balayage SC qui est conçu pour que tous les endroits de la portion de surface à analyser soient contenus au moins une fois dans une zone de détection. Le chemin de balayage SC peut être suivi dans la surface de la pièce 10 par un point central de zone de chauffage, pour des positions successives de la pièce 10 dans chacune desquelles est réalisée la séquence d'analyse photothermique statique qui a été décrite précédemment. Dans ce cas, le moyen d'apport de chaleur 1 peut fonctionner de manière intermittente et périodique, par exemple en envoyant une impulsion laser vers la surface de la pièce 10 pour chaque position de celle-ci. Les points P indiqués le long du chemin de balayage SC indiquent des positions successives possibles pour le centre des zones de chauffage. Afin de réduire le temps de cycle d'analyse de la pièce 10, ces positions P peuvent être réalisées chronologiquement selon un ordre continu le long du chemin de balayage SC, correspondant aux flèches indiquées dans [Fig. 2]. Il est alors particulièrement avantageux, pour augmenter le contraste des images d'analyse ANA qui sont saisies, et le contraste des images de révélation REV qui sont calculées selon l'invention, à raison d'une image de révélation REV pour chaque position de la zone de chauffage dans la portion de surface à analyser, que la zone de détection soit située en aval de la zone de chauffage par rapport au sens du balayage. Autrement dit, un même endroit de la surface à analyser apparaît de préférence d'abord dans une zone de détection qui est saisie en image par les moyens 2, avant d'être utilisée en tant que zone de chauffage ciblée par le moyen 1, ou avant de se trouver à proximité d'une telle zone de chauffage. Dans [Fig. 2], $P_1$ désigne un point central de zone de chauffage sur le chemin de balayage SC, correspondant à la zone de chauffage $ZC_1$ et à la zone de détection $ZD_1$. Cette dernière est décalée par rapport à la zone de chauffage $ZC_1$ dans le sens de la flèche de parcours du chemin de balayage SC pour le segment de chemin qui contient le point $P_1$. De même, $P_2$ désigne un autre point central de zone de chauffage sur le chemin de balayage SC, qui est réalisé plus tard que le point $P_1$, en correspondant à la zone de chauffage $ZC_2$ et à la zone de détection $ZD_2$. La zone de détection $ZD_2$ est alors décalée par rapport à la zone de chauffage $ZC_2$ dans le sens de la flèche de parcours du chemin de balayage SC qui est relative au segment de chemin qui contient le point $P_2$.

Le chemin de balayage SC est conçu de préférence pour que toute la portion de surface à analyser de la pièce 10 soit couverte par les zones de détection qui sont associées à tous les points P successifs. Ainsi, un regroupement de toutes les images de révélation REV peut permettre de reconstituer l'ensemble de la portion de surface à analyser de la pièce 10, dans une image de visualisation globale qui est destinée à être affichée sur l'écran 5. Eventuellement, des bandes de recouvrement entre zones de détection distinctes peuvent exister entre des méandres voisins du chemin de balayage SC. Des opérations de raccordement d'images peuvent être utilisées entre les images de révélation individuelles REV, afin que l'image globale ne comporte pas d'artéfacts dus à sa production par morceaux séparés. De façon connue dans le domaine des traitements d'images, de telles opérations de raccordement d'images peuvent comprendre des corrections de niveaux d'intensité moyens des images de révélation individuelles, des déplacements relatifs d'images de révélation qui sont voisines pour assurer une continuité de motifs d'image à travers des limites d'images individuelles, des lissages de niveaux d'intensité de points d'images perpendiculairement aux limites d'images individuelles, etc.

L'invention permet donc de contrôler l'ensemble de la portion de surface de la pièce 10 en n'effectuant qu'un seul balayage de cette portion de surface. La durée du contrôle, appelée temps de cycle d'analyse, est donc réduite par rapport à un procédé d'analyse photothermique qui nécessite de parcourir le chemin de balayage deux fois, selon des sens de parcours qui sont opposés. Lorsque le temps de cycle d'analyse de la pièce 10 est principalement dû au balayage, plutôt qu'au montage de la pièce 10 sur le support mobile 11a, le gain de temps de cycle d'analyse peut être de l'ordre d'un facteur deux.

Par ailleurs, étant donné que chaque image de révélation REV ne nécessite d'acquérir qu'une seule image d'analyse ANA dans un procédé conforme à l'invention, chaque image de révélation REV présente une valeur de rapport signal-sur-bruit qui est réduite par rapport aux procédés de l'art antérieur pour lesquels chaque image de révélation est déduite d'une différence entre deux images d'analyse qui sont relatives à une même zone de détection. En effet, dans ces procédés antérieurs, chacune des deux images d'analyse qui sont combinées entre elles est affectée d'un bruit aléatoire d'imagerie thermique qui est indépendant de celui de l'autre image d'analyse. Lorsque le rapport signal-sur-bruit de l'image de révélation, noté RSB, est exprimé en décibels (dB)

$$< RSB >= 20 \cdot log_{10}(\tfrac{S}{B})$$

selon la formule , où S est l'amplitude maximale de la variation d'intensité de point d'image au niveau d'une fissure dans la surface de la pièce 10, et B est l'amplitude maximale du bruit d'imagerie thermique tel que mesuré dans une zone de référence de la surface de la pièce 10 réputée exempte de défauts. Pour une pièce à analyser constituée par un substrat solide qui est recouvert d'une couche mince de protection contre la corrosion, une amélioration du rapport signal-sur-bruit dans un facteur compris entre 2,8 et 6,3 a été obtenue.

Il est entendu que l'invention peut être reproduite en modifiant des aspects secondaires des mises en oeuvre qui ont été décrites en détail ci-dessus, tout en conservant certains au moins des avantages cités. Notamment, la zone de chauffage ZC peut avoir une forme quelconque, en particulier une forme de segment rectiligne qui est orienté perpendiculairement au chemin de balayage SC. De même, la forme de la zone de détection ZD n'est pas limitée à un parallélépipède rectangle qui correspond à la matrice du capteur d'images thermiques. Par exemple, la zone de détection ZD peut avoir la forme d'un demi-disque dont le foyer est superposé au centre de la zone de chauffage ZC, et être orientée vers l'aval de cette dernière par rapport au sens de parcours du chemin de balayage SC. En outre, toutes les valeurs numériques qui ont été citées ne l'ont été qu'à titre d'illustration, et peuvent être changées en fonction de l'application considérée.

## Revendications

1. Procédé d'analyse photothermique d'une pièce (10) qui est constituée par au moins un matériau solide, le procédé étant destiné à révéler si au moins un défaut est présent dans une portion de surface de la pièce, et comprenant les étapes suivantes :

/1/ injecter de la chaleur dans une première zone de la portion de surface de la pièce, appelée zone de chauffage (ZC), puis, après une durée pendant laquelle une partie de la chaleur injectée a diffusé dans une autre zone de la portion de surface de la pièce, qui est appelée zone de détection (ZD) et qui est distincte de la zone de chauffage, saisir au moins une image thermique, appelée image d'analyse (ANA), de la zone de détection ; et

/2/ soustraire une image de référence (REF) à l'image d'analyse (ANA), au moins pour une partie de ladite image d'analyse qui correspond à la zone de détection (ZD), afin d'obtenir une image de révélation (REV) qui montre si au moins un défaut est présent dans ladite zone de détection,

le procédé étant **caractérisé en ce que**, pour chaque image d'analyse (ANA) saisie, l'image de référence (REF) qui est soustraite à ladite image d'analyse correspond à une répartition d'émission thermique dans la zone de détection (ZD), telle que provoquée par une partie au moins de la chaleur injectée dans la portion de surface de la pièce (10), pour un cas où ladite portion de surface de la pièce serait dépourvue de défaut dans la zone de détection,

et **en ce que** l'image de référence (REF) qui est soustraite à l'image d'analyse (ANA) résulte d'une recherche de concordance maximale entre ladite image d'analyse et un modèle paramétré de répartition d'émission thermique qui est utilisé pour définir le cas de la portion de surface de la pièce (10) dépourvue de défaut dans la zone de détection (ZD), le modèle paramétré de répartition d'émission thermique qui est utilisé pour définir le cas de la portion de surface de la pièce (10) dépourvue de défaut dans la zone de détection (ZD), correspondant à un régime stationnaire de diffusion de la chaleur dans ladite zone de détection, et décrit par une équation qui fournit des valeurs de température en fonction de deux coordonnées géométriques définies dans la portion de surface de la pièce, ladite équation comprenant une fonction gaussienne de l'une au moins des deux coordonnées géométriques, multipliée par un facteur d'amplitude constant, et additionnée d'un terme constant de décalage.

2. Procédé selon la revendication 1, suivant lequel la chaleur est injectée dans la zone de chauffage (ZC) à l'aide d'un faisceau laser (F) qui est dirigé sur ladite zone de chauffage pendant une durée d'irradiation déterminée.

3. Procédé selon l'une quelconque des revendications précédentes, suivant lequel :

   - l'étape /1/ est exécutée plusieurs fois en déplaçant à chaque fois la zone de chauffage (ZC) dans la portion de surface de la pièce (10), de façon à réaliser un balayage dans ladite portion de surface avec des positions successives de la zone de chauffage, et une nouvelle image d'analyse (ANA) est saisie pour chaque position de ladite zone de chauffage, la zone de détection (ZD) se déplaçant dans la portion de surface de la pièce conjointement avec la zone de chauffage, de sorte qu'un endroit quelconque dans la portion de surface de la pièce soit contenu au moins une fois dans la zone de détection ; et

   - l'étape /2/ est répétée pour chaque exécution de l'étape /1/, en utilisant à chaque fois une image de référence (REF) qui est attribuée à la zone de détection (ZD) telle que située dans la portion de surface de la pièce (10) à ladite exécution de l'étape /1/.

4. Procédé selon la revendication 3, suivant lequel, pour chaque exécution de l'étape /1/, la zone de détection (ZD) est décalée vers l'aval par rapport à la zone de chauffage (ZC), selon un sens de déplacement de ladite zone de chauffage lors du balayage.

5. Procédé selon la revendication 3 ou 4, comprenant en outre l'étape suivante :
/3/ en utilisant des opérations de raccordement, de superposition, de moyenne et/ou de lissage appliquées à plusieurs des images de révélation (REV) telles qu'obtenues lors des exécutions multiples de l'étape /2/, reconstruire une image globale de toute la portion de surface de la pièce (10), destinée à montrer des défauts qui sont présents dans toute ladite la portion de surface.

6. Procédé selon l'une quelconque des revendications précédentes, utilisé pour une pièce métallurgique, une pièce constituée au moins en partie par un matériau céramique, une pièce constituée au moins en partie par un matériau composite, notamment une aube de turboréacteur ou de soufflante, une aube de turbine de production d'énergie, une pièce de fermeture de cuve ou d'étanchéité pour centrale de production d'énergie, et une pièce mécanique de transmission de déplacement.

7. Procédé selon l'une quelconque des revendications précédentes, suivant lequel la pièce (10) comprend un substrat solide (10s) et un revêtement (10r) qui est porté par ledit substrat au moins dans la portion de surface de ladite pièce, et le procédé est utilisé pour révéler des fissures présentes dans le revêtement.

8. Ensemble d'analyse photothermique, pour révéler si au moins un défaut est présent dans une portion de surface d'une pièce (10) constituée par au moins un matériau solide, l'ensemble comprenant :

   - un moyen d'apport de chaleur (1), adapté pour injecter de la chaleur dans une première zone de la portion de surface de la pièce (10), appelée zone de chauffage (ZC) ;

- des moyens de saisie d'images thermiques (2), agencés pour saisir des images thermiques, appelées images d'analyse (ANA), d'une autre zone de la portion de surface de la pièce (10), qui est appelée zone de détection (ZD) et qui est distincte de la zone de chauffage (ZC), les moyens de saisie d'images thermiques étant contrôlés pour saisir chaque image d'analyse après une durée pendant laquelle une partie de la chaleur injectée par le moyen d'apport de chaleur (1) a diffusé à partir de la zone de chauffage dans la zone de détection ;

- une unité de traitement d'images (4), adaptée pour soustraire une image de référence (REF) à chaque image d'analyse (ANA), au moins pour une partie de ladite image d'analyse qui correspond à la zone de détection (ZD), afin d'obtenir une image de révélation (REV) qui montre si au moins un défaut est présent dans ladite zone de détection ; et

- optionnellement des moyens de balayage (11), adaptés pour déplacer la zone de chauffage (ZC) dans la portion de surface de la pièce (10), de façon à réaliser un balayage dans ladite portion de surface avec des positions successives de la zone de chauffage, la zone de détection (ZD) se déplaçant dans la portion de surface de la pièce conjointement avec la zone de chauffage, de sorte qu'un endroit quelconque dans la portion de surface de la pièce soit contenu au moins une fois dans la zone de détection, **caractérisé en ce que** l'unité de traitement d'images (4) est adaptée de sorte que, pour chaque image d'analyse (ANA) saisie, l'image de référence (REF) qui est soustraite à ladite image d'analyse corresponde à une répartition d'émission thermique dans la zone de détection (ZD), telle que provoquée par une partie au moins de la chaleur injectée dans la portion de surface de la pièce (10), pour un cas où ladite portion de surface de la pièce serait dépourvue de défaut dans la zone de détection,

et **en ce que** l'image de référence (REF) qui est soustraite à l'image d'analyse (ANA) résulte d'une recherche de concordance maximale entre ladite image d'analyse et un modèle paramétré de répartition d'émission thermique qui est utilisé pour définir le cas de la portion de surface de la pièce (10) dépourvue de défaut dans la zone de détection (ZD), le modèle paramétré de répartition d'émission thermique qui est utilisé pour définir le cas de la portion de surface de la pièce (10) dépourvue de défaut dans la zone de détection (ZD), correspondant à un régime stationnaire de diffusion de la chaleur dans ladite zone de détection, et décrit par une équation qui fournit des valeurs de température en fonction de deux coordonnées géométriques définies dans la portion de surface de la pièce, ladite équation comprenant une fonction gaussienne de l'une au moins des deux coordonnées géométriques, multipliée par un facteur d'amplitude constant, et additionnée d'un terme constant de décalage.

**9.** Ensemble selon la revendication 8, adapté en outre pour mettre en oeuvre un procédé qui est conforme à l'une quelconque des revendications 2 à 7.

**Patentansprüche**

**1.** Verfahren zur photothermischen Analyse eines Teils (10), das aus wenigstens einem festen Material besteht, wobei das Verfahren dazu bestimmt ist, festzustellen, ob wenigstens ein Defekt in einem Oberflächenbereich des Teils vorhanden ist, und die folgenden Schritte umfasst:

/1/ Einleiten von Wärme in eine erste Zone des Oberflächenbereichs des Teils, die als Heizzone (ZC) bezeichnet wird, dann, nach einer Zeitdauer, während der ein Teil der eingeleiteten Wärme in eine andere Zone des Oberflächenbereichs des Teils diffundiert ist, die als Erfassungszone (ZD) bezeichnet wird und sich von der Heizzone unterscheidet, Erfassen wenigstens eines Wärmebilds der Erfassungszone, das als Analysebild (ANA) bezeichnet wird; und
/2/ Subtrahieren eines Referenzbildes (REF) von dem Analysebild (ANA), wenigstens für einen Teil des Analysebildes, der der Erfassungszone (ZD) entspricht, um ein Erkennungsbild (REV) zu erhalten, welches zeigt, ob wenigstens ein Defekt in der Erfassungszone vorhanden ist,

wobei das Verfahren **dadurch gekennzeichnet ist, dass** für jedes erfasste Analysebild (ANA) das Referenzbild (REF), das von dem Analysebild subtrahiert wird, einer Verteilung der Wärmeemission in der Erfassungszone (ZD) entspricht, wie sie durch wenigstens einen Teil der in den Oberflächenbereich des Teils (10) eingeleiteten Wärme verursacht wird, für den Fall, dass der Oberflächenbereich des Teils in der Erfassungszone keinen Defekt aufweist, und dass das Referenzbild (REF), das von dem Analysebild (ANA) subtrahiert wird, aus einer Suche nach maximaler Übereinstimmung zwischen dem Analysebild und einem parametrischen Modell der Wärmeemissionsverteilung resultiert, das verwendet wird, um den Fall des Oberflächenbereichs des Teils (10) ohne Defekt in der Erfassungszone (ZD) zu definieren, wobei das parametrische Modell der Wärmeemissionsverteilung, das verwendet wird, um den Fall des Oberflächenbereichs des Teils (10) ohne Defekt in der Erfassungszone (ZD) zu definieren, einem stationären Wärmediffusionsmodell in der Erfassungszone entspricht, und durch eine Gleichung beschrieben wird, die Temperaturwerte als Funktion von zwei geometrischen Koordinaten liefert, die in dem Oberflächenbereich des Teils definiert sind, wobei die Gleichung eine Gaußsche Funktion wenigstens einer der beiden geometrischen Koordinaten umfasst, multipliziert mit einem konstanten Amplitudenfaktor und addiert zu einem konstanten Verschiebungsterm.

2. Verfahren nach Anspruch 1, wobei die Wärme in die Heizzone (ZC) mit Hilfe eines Laserstrahls (F) eingeleitet wird, der während einer bestimmten Bestrahlungsdauer auf die Heizzone gerichtet wird.

3. Verfahren nach einem der vorhergehenden Ansprüche, wobei:

   - Schritt /1/ mehrmals ausgeführt wird, wobei die Heizzone (ZC) jedes Mal in den Oberflächenbereich des Teils (10) verlagert wird, um den Oberflächenbereich mit aufeinanderfolgenden Positionen der Heizzone abzutasten, wobei ein neues Analysebild (ANA) für jede Position der Heizzone erfasst wird, wobei sich die Erfassungszone (ZD) zusammen mit der Heizzone derart in den Oberflächenbereich des Teils bewegt, dass eine beliebige Stelle im Oberflächenbereich des Teils wenigstens einmal in der Erfassungszone enthalten ist; und
   - Schritt /2/ für jede Ausführung von Schritt /1/ wiederholt wird, wobei jedes Mal ein Referenzbild (REF) verwendet wird, das der Erfassungszone (ZD) zugeordnet wird, wie sie bei der Ausführung von Schritt /1/ in dem Oberflächenbereich des Teils (10) vorhanden ist.

4. Verfahren nach Anspruch 3, wobei bei jeder Ausführung von Schritt /1/ die Erfassungszone (ZD) in Bezug auf die Heizzone (ZC) in einer Bewegungsrichtung der Heizzone beim Abtasten stromabwärts verschoben wird.

5. Verfahren nach Anspruch 3 oder 4, ferner umfassend den folgenden Schritt:
   /3/ unter Verwendung von Verbindungs-, Überlagerungs-, Mittelwertbildungs- und/oder Glättungsoperationen, die auf mehrere der Erkennungsbilder (REV) angewendet werden, wie sie bei mehrfacher Ausführung von Schritt /2/ erhalten werden, Rekonstruktion eines Gesamtbildes des gesamten Oberflächenbereichs des Teils (10), das dazu bestimmt ist, Defekte zu zeigen, die in dem gesamten Oberflächenbereich vorhanden sind.

6. Verfahren nach einem der vorhergehenden Ansprüche, das für ein metallurgisches Teil, ein Teil, das wenigstens teilweise aus einem keramischen Material besteht, ein Teil, das wenigstens teilweise aus einem Verbundmaterial besteht, insbesondere eine Turbinen- oder Gebläseschaufel, eine Turbinenschaufel zur Energieerzeugung, ein Behälter- oder Dichtungsabschluss für ein Kraftwerk und ein mechanisches Teil zur Übertragung von Bewegungen, verwendet wird.

7. Verfahren nach einem der vorhergehenden Ansprüche, wobei das Teil (10) ein festes Substrat (10s) und eine Beschichtung (10r) umfasst, die von dem Substrat wenigstens in dem Oberflächenbereich des Teils getragen wird, und wobei das Verfahren verwendet wird, um Risse in der Beschichtung aufzudecken.

8. Photothermische Analyseanordnung zur Feststellung, ob wenigstens ein Defekt in einem Oberflächenbereich eines Teils (10) vorhanden ist, das aus wenigstens einem festen Material besteht, wobei die Anordnung Folgendes umfasst:

   - ein Wärmezufuhrmittel (1), das dazu ausgebildet ist, Wärme in eine erste Zone des Oberflächenbereichs des Teils (10) einzuleiten, die als Heizzone (ZC) bezeichnet wird;
   - Wärmebildaufnahmemittel (2), die dazu ausgebildet sind, Wärmebilder, sogenannte Analysebilder (ANA), von einer weiteren Zonr des Oberflächenbereichs des Teils (10) aufzunehmen, die als Erfassungszone (ZD) bezeichnet wird und von der Heizzone (ZC) getrennt ist, wobei die Wärmebildaufnahmemittel derart gesteuert werden, dass sie jedes Analysebild nach einer Zeitdauer erfassen, während der ein Teil der von dem Wärmezufuhrmittel (1) eingeleiteten Wärme von der Heizzone in die Erfassungszone diffundiert ist;
   - eine Bildverarbeitungseinheit (4), die dazu ausgebildet ist, von jedem Analysebild (ANA) ein Referenzbild (REF) zu subtrahieren, wenigstens für einen Teil des Analysebildes, der der Erfassungszone (ZD) entspricht, um ein Erkennungsbild (REV) zu erhalten, das zeigt, ob wenigstens ein Defekt in dem Erfassungsbereich vorliegt; und
   - optional Abtastmittel (11), die dazu ausgebildet sind, die Heizzone (ZC) in dem Oberflächenbereich des Teils (10) zu bewegen, um so ein Abtasten in dem Oberflächenbereich mit aufeinanderfolgenden Positionen der Heizzone durchzuführen, wobei sich die Erfassungzone (ZD) in dem Oberflächenbereich des Teils zusammen mit der Heizzone bewegt, so dass eine beliebige Stelle in dem Oberflächenbereich des Teils wenigstens einmal in der Detektionszone enthalten ist, **dadurch gekennzeichnet, dass** die Bildverarbeitungseinheit (4) derart ausgebildet ist, dass für jedes erfasste Analysebild (ANA) das Referenzbild (REF), das von dem Analysebild subtrahiert wird, einer Verteilung von Wärmeemissionen in der Erfassungszone (ZD) entspricht, wie sie durch wenigstens einen Teil der in den Oberflächenbereich des Teils (10) eingeleiteten Wärme verursacht wird, für einen Fall, in dem der Oberflächenbereich des Teils in der Erfassungszone frei von Defekten ist,

und dass das Referenzbild (REF), das von dem Analysebild (ANA) subtrahiert wird, aus einer Suche nach maximaler Übereinstimmung zwischen dem Analysebild und einem parametrischen Modell der Wärmeemissionsverteilung resultiert, das verwendet wird, um den Fall des Oberflächenbereichs des Teils (10) ohne Defekt in der Erfassungszone (ZD) zu definieren, wobei das parametrische Modell der Wärmeemissionsverteilung, das verwendet wird, um den Fall des Oberflächenbereichs des Teils (10) ohne Defekt in der Erfassungszone (ZD) zu definieren, einem stationären Wärmediffusionsmodell in der Erfassungszone entspricht, und durch eine Gleichung beschrieben wird, die Temperaturwerte als Funktion von zwei geometrischen Koordinaten liefert, die in dem Oberflächenbereich des Teils definiert sind, wobei die Gleichung eine Gaußsche Funktion wenigstens einer der beiden geometrischen Koordinaten umfasst, multipliziert mit einem konstanten Amplitudenfaktor und addiert zu einem konstanten Verschiebungsterm.

**9.** Anordnung nach Anspruch 8, welche ferner dazu ausgebildet ist, einen Prozess zu implementieren, der mit einem der Ansprüche 2 bis 7 übereinstimmt.

**Claims**

**1.** A method for photothermal analysis of a piece (10) which is composed of at least one solid material, the method being intended to reveal whether at least one defect is present in a surface portion of the piece, and comprising the following steps:

/1/ injecting heat into a first region of the surface portion of the piece, called heating region (ZC), then, after a period during which some of the injected heat has diffused into another region of the surface of the piece, which is called detection region (ZD) and which is distinct from the heating region, capturing at least one thermal image, called analysis image (ANA), of the detection region; and

/2/ subtracting a reference image (REF) from the analysis image (ANA), at least for a portion of said analysis image which corresponds to the detection region (ZD), in order to obtain a revealing image (REV) which shows whether at least one defect is present in said detection region,

the method being **characterized in that**, for each analysis image (ANA) captured, the reference image (REF) which is subtracted from said analysis image corresponds to a thermal emission distribution in the detection region (ZD), as caused by at least some of the heat injected into the surface portion of the piece (10), for a case where said surface portion of the piece is without defects in the detection region,

and **in that** the reference image (REF) which is subtracted from the analysis image (ANA) results from a search for best match between said analysis image and a configured model of thermal emission distribution which is used to define the case where the surface portion of the piece (10) is without defects in the detection region (ZD), the configured model of thermal emission distribution which is used to define the case where the surface portion of the piece (10) is without defects in the detection region (ZD), corresponding to a steady regime of heat diffusion in said detection region, and described by an equation providing temperature values as a function of two geometric coordinates defined within the surface portion of the piece, said equation comprising a Gaussian function of at least one of both geometric coordinates, multiplied by a constant amplitude factor, and added with a constant offset term.

**2.** The method according to claim 1, wherein heat is injected into the heating region (ZC) by means of a laser beam (F) which is directed onto said heating region for a determined irradiation time.

**3.** The method according to any one of the preceding claims, wherein:

- step /1/ is executed several times, each time moving the heating region (ZC) within the surface portion of the piece (10), so as to perform a scan in said surface portion with successive positions of the heating region, and a new analysis image (ANA) is captured for each position of said heating region, the detection region (ZD) being moved within the surface portion of the piece together with the heating region, so that any location in the surface portion of the piece is contained at least once in the detection region; and

- step /2/ is repeated for each execution of step /1/, each time using a reference image (REF) which is assigned to the detection region (ZD) as located in the surface portion of the piece (10) at said execution of step /1/.

4. The method according to claim 3, wherein, for each execution of step /1/, the detection region (ZD) is shifted downstream relative to the heating region (ZC), according to a direction of movement of said heating region during scanning.

5. The method according to claim 3 or 4, further comprising the following step:
/3/ using splicing, superimposing, averaging, and/or smoothing operations applied to several of the revealing images (REV) as obtained during the multiple executions of step /2/, reconstructing an overall image of the entire surface portion of the piece (10), intended to show defects present in the whole surface portion.

6. The method according to any one of the preceding claims, used for a metallurgical piece, a piece at least partly composed of a ceramic material, a piece at least partly composed of a composite material, in particular a blade of a turbojet engine or fan, a blade of an energy production turbine, a piece closing off or sealing a vessel of a power plant, and a mechanical piece for transmission of movement.

7. The method according to any one of the preceding claims, wherein the piece (10) comprises a solid substrate (10s) and a coating (10r) which is carried by said substrate at least in the surface portion of said piece, and the method is used to reveal cracks present in the coating.

8. A photothermal analysis assembly, for revealing whether at least one defect is present in a surface portion of a piece (10) composed of at least one solid material, the assembly comprising:

- a heat supplying means (1), adapted for injecting heat into a first region of the surface portion of the piece (10), called heating region (ZC);
- means for capturing thermal images (2), arranged to capture thermal images, called analysis images (ANA), of another region of the surface portion of the piece (10), which is called detection region (ZD) and which is distinct from the heating region (ZC), the means for capturing thermal images being controlled to capture each analysis image after a period during which some of the heat injected by the heat supplying means (1) has diffused from the heating region into the detection region;

- an image processing unit (4), adapted for subtracting a reference image (REF) from each analysis image (ANA), at least for a portion of said analysis image which corresponds to the detection region (ZD), in order to obtain a revealing image (REV) which shows whether at least one defect is present in said detection region; and
- optionally, scanning means (11), suitable for moving the heating region (ZC) within the surface portion of the piece (10), so as to perform a scan in said surface portion with successive positions of the heating region, the detection region (ZD) being moved within the surface portion of the piece together with the heating region, so that any location in the surface portion of the piece is contained at least once in the detection region,

**characterized in that** the image processing unit (4) is adapted so that, for each analysis image (ANA) captured, the reference image (REF) which is subtracted from said analysis image corresponds to a thermal emission distribution in the detection region (ZD), as caused by at least some of the heat injected into the surface portion of the piece (10), for a case where said surface portion of the piece is without defects in the detection region,

and **in that** the reference image (REF) which is subtracted from the analysis image (ANA) results from a search for best match between said analysis image and a configured model of thermal emission distribution which is used to define the case where the surface portion of the piece (10) is without defects in the detection region (ZD), corresponding to a steady regime of heat diffusion in said detection region, and described by an equation providing temperature values as a function of two geometric coordinates defined within the surface portion of the piece, said equation comprising a Gaussian function of at least one of both geometric coordinates, multiplied by a constant amplitude factor, and added with a constant offset term.

9. The assembly according to claim 8, further adapted for implementing a method according to any one of claims 2 to 7.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9839641 A

**Littérature non-brevet citée dans la description**

- **ZHANWEI LIU et al.** Linear laser fast scanning thermography NDT for artificiel disbond defects in thermal barrier coatings. *Optics Express,* vol. 25 (25), 31789

- **S.S. PAWAR et al.** Applying the heat conduction-based 3D normalization and thermal tomography to pulsed infrared thermography for defect characterization in composite materials. *International Journal of Heat and Mass Transfer,* vol. 94, 56-65